# EUROPÄISCHE PATENTSCHRIFT

(11) **EP 3 504 102 B1**
(45) Veröffentlichungstag und Bekanntmachung des Hinweises auf die Patenterteilung: **04.11.2020**
(21) Anmeldenummer: 17735513.8
(22) Anmeldetag: 05.07.2017
(51) Int. Cl.: B62D 1/08, B62D 1/181

(54) **LENKRAD ZUM BETÄTIGEN EINER LENKBEWEGUNG EINES FAHRZEUGES**
STEERING WHEEL FOR CONTROLLING STEERING MOVEMENT OF A VEHICLE
VOLANT DE DIRECTION POUR ACTIONNER UN MOUVEMENT DE BRAQUAGE D'UN VÉHICULE

(30) Priorität: 23.08.2016 DE 102016215843
(43) Veröffentlichungstag der Anmeldung: 03.07.2019
(73) Patentinhaber: Bayerische Motoren Werke Aktiengesellschaft, 80809 München (DE)
(72) Erfinder: SCHMIDT, Roland, 82131 Stockdorf (DE); BÖTTCHER, Uwe, 82110 Germering (DE); SCHOLZ, Hubert, 81543 München (DE)
(86) Internationale Anmeldenummer: PCT/EP2017/066735
(87) Internationale Veröffentlichungsnummer: WO 2018/036703

(56) Entgegenhaltungen:
- DE-A1- 10 247 370
- DE-A1-102006 006 995
- KR-A- 20070 062 114

## Beschreibung

Die Erfindung betrifft ein Lenkrad zum Betätigen einer Lenkbewegung eines Fahrzeuges nach dem Oberbegriff des Anspruchs 1. Zum Stand der Technik wird beispielshalber auf die GB 357 614 A die GB 468 489 A und insbesondere auf die DE 10 2004 046 321 A1 verwiesen. Das Dokument KR-2007/0062004 A, das als nächstliegender Stand der Technik angesehen wird, offenbart ein Lenkrad gemäß dem Oberbegriff des Anspruchs 1.

Konventionelle Lenkräder, welche derzeit in Fahrzeugen, insbesondere in Kraftfahrzeugen, verwendet werden, sind zur Anpassung an unterschiedliche Körpergrößen der Fahrzeugführer über eine Lenkradsäule, auf welcher das Lenkrad gelagert ist, in Richtung der Lenkradsäulenachse auf eine optimale Lenkradposition verstellbar. Die Höhen- und Längen-Verstellvorrichtung der Lenkradsäule ist dabei üblicherweise in das Lenkradsäulengehäuse integriert. Die Positionsanpassung geschieht entweder manuell oder unter Zuhilfenahme von Elektromotoren, Spindeln, Zahnradmechanik oder Drehverschlüssen.

Das Lenkrad selbst umfasst dabei üblicherweise einen Lenkradtopf und einen Lenkradkranz sowie diese beiden verbindende Speichen. Aus dem Stand der Technik sind neben flachen auch geschüsselte Lenkräder bekannt. Diese zeichnen sich dadurch aus, dass der Lenkradtopf entlang der Lenkradsäulenachse betrachtet, vom Lenkradkranz beabstandet ist. Die Speichen verlaufen dabei demnach nicht nur in radialer Richtung, wie es bei den flachen Lenkrädern der Fall ist, sondern auch in axialer Richtung des Lenkrades bzw. der Lenkradsäule, weshalb das Lenkrad schüsselförmig ausgeführt ist.

Die genannte Positionsverstellung der Lenkradsäule, welche auch unter der Bezeichnung einer Teleskoplenkradsäule bekannt ist, kann wie bereits beschrieben entweder manuell oder mit Hilfe von geeigneten Aktoren wie beispielsweise einem Elektromotor erfolgen.

Nachteilig an diesen Teleskoplenkradsäulen ist jedoch, dass diese viel Bauraum einnehmen und im Hinblick auf zukünftige Fahrkonzepte, wie beispielsweise das autonome Fahren, nicht die erforderliche Flexibilität bieten.

Neben dem beschriebenen Konzept der Teleskoplenkradsäulen sind auch Lenkräder bekannt, bei welchem die Anpassung des Abstandes zwischen dem Oberkörper und dem Lenkradkranz durch Verstellen des Abstandes zwischen Lenkradtopf und Lenkradkranz eingestellt werden kann. Beispielsweise beschreiben die GB 357 614 A und die GB 468 489 A ein geschüsseltes Lenkrad, bei welchem die Speichen teleskopierbar sind und somit der Abstand zwischen Lenkradtopf und Lenkradkranz individuell je nach Wunsch eingestellt werden kann. Während diese Einstellung bei den beiden zuletzt genannten Schriften manuell geschieht, wird in der DE 10 2004 046 321 A1 ein Lenkrad vorgeschlagen, bei welchem mindestens ein Abschnitt des Lenkradkranzes gegenüber einem Lenkradgrundkörper mittels einem Verstellmechanismus, genauer mittels eines Antriebsmittels, in seiner Position verstellbar ist.

Nachteilig an diesem Stand der Technik ist jedoch, dass die Verwendung eines Antriebmittels je Speiche einen erhöhten Bauraumbedarf mit sich. Denn insbesondere im Lenkradbereich ist aufgrund der notwendigen Integration von Sicherheitsbauteilen, wie beispielsweise einen Airbag, nur wenig Bauraum zur Integration von weiteren Bauteilen vorhanden.

Es ist somit Aufgabe der Erfindung ein Lenkrad aufzuzeigen, welches einen komfortablen Verstellmechanismus zur Anpassung an Körpermaße ermöglicht, wobei der Verstellmechanismus bestmöglich und unter Aufwendung von wenig Bauraumbedarf in das Lenkrad integrierbar ist.

Die Lösung der Aufgabe ergibt sich durch ein Lenkrad zur Betätigung einer Lenkbewegung eines Fahrzeuges mit den Merkmalen des Anspruchs 1. Vorteilhafte Aus- und Weiterbildungen sind Inhalt der Unteransprüche.

Es wird ein Lenkrad vorgeschlagen, welches neben einem Lenkradtopf zur Lagerung des Lenkrades an einem Fahrzeug, einen Lenkradkranz sowie mindestens zwei den Lenkradkranz mit dem Lenkradtopf verbindende Speichen umfasst. Diese Speichen sind mittels eines geeigneten Antriebmittels telesokopierbar, wobei der Lenkradkranz gegenüber dem Lenkradtopf in Richtung der Drehachse des Lenkrades verschiebbar ist. Erfindungsgemäß umfasst das Antriebsmittel einen einzigen Antriebsmotor zur Ansteuerung von mindestens zwei Speichen.

Die genannten Teleskoplenkradspeichen ermöglichen dabei eine axiale Verschiebung (also in Richtung der Drehachse des Lenkrades betrachtet) des Lenkradkranzes gegenüber dem Lenkradtopf. Eine radiale Verschiebung bzw. Längenänderung der Lenkradspeichen ist aufgrund der starren Geometrie des Lenkradkranzes bevorzugt nicht vorgesehen.

In einer bevorzugten Ausführung der Erfindung umfasst jede Speiche jeweils ein bewegliches Teilsegment und jeweils ein unbewegliches Teilsegment. Beide Teilsegmente sind dabei bevorzugt ineinander angeordnet, wobei das bewegliche Teilsegment der Speiche jeweils relativ zum unbeweglichen Teilsegment der Speiche teleskopierbar bzw. verschiebbar bzw. bewegbar ist.

Beispielsweise können zwischen dem Lenkradkranz und dem Lenkradtopf drei Speichen der genannten Art angeordnet sein, welche ihrerseits vorzugweise rohrartig oder in Form eines Hohlzylinders ausgebildet sind.

Weiterhin sind die Speichen bzw. sind mindestens zwei Speichen jeweils schwenkbar mit dem Lenkradkranz sowie mit dem Lenkradtopf verbunden. Vorzugsweise ist dabei das unbewegliche Teilsegment jeder Speiche schwenkbar mit dem Lenkradtopf und das bewegliche Teilsegment jeder Speiche schwenkbar mit dem Lenkradkranz verbunden. So können die jeweiligen Teilsegmente beispielsweise mittels eines Drehgelenks oder eines Scharniers an dem Lenkradkranz bzw. am Lenkradtopf angebunden sein. Die Drehachse der schwenkbaren Verbindung verläuft dabei in Richtung einer Tangente des virtuellen Drehkreises des Lenkrades. Durch die genannte schwenkbare Verbindung der jeweiligen Teilsegmente einer Speiche ist das System statisch bestimmt, wobei eine Abstandsänderung zwischen Lenkradtopf und Lenkradkranz in Richtung der Drehachse des Lenkrades durch die Verlängerung bzw. Verkürzung der Speichen ermöglicht werden kann.

In einer nächsten bevorzugten Ausführung der Erfindung ist der Antriebsmotor zur Veranlassung einer Längenänderung von mindestens zwei Speichen in dem Lenkradtopf angeordnet. Von dort aus kann der Antriebsmotor dann mindestens zwei der genannten Speichen zur Längenänderung ansteuern bzw. antreiben.

Bevorzugt sind dabei die mindestens zwei Speichen, welche vom Antriebsmotor angesteuert werden, mittels einer Kopplungsvorrichtung mit dem Antriebsmotor gekoppelt. Eine derartige Kopplungsvorrichtung stellt eine synchronisierte Längenänderung der mindestens zwei Speichen sicher. Dementsprechend sind mindestens zwei (bevorzugt drei) Speichen derart miteinander gekoppelt, dass deren Längenänderung stets die gleiche ist. Die genannte Kopplungsvorrichtung kann dabei auf unterschiedliche Weisen realisiert werden.

Eine erste Möglichkeit die Speichen des Lenkrades mit dem Antriebsmotor zu koppeln und gleichzeitig eine synchronisierte Längenänderung zu gewährleisten, ist die Verwendung einer Koppelstange. Eine derartige Koppelstange kann beispielsweise an den Drehgelenken oder an den Scharnieren, welche den Lenkradtopf mit einem der beiden Teilsegmente der Speiche verbindet, angeordnet sein. Bei der Ausführung von beispielsweise zwei Speichen an einem Lenkrad, kann die Koppelstange an einem Ende mit dem Drehgelenk der ersten Speiche und an dem anderen Ende mit dem Drehgelenk der zweiten Seite fest verbunden sein. Bevorzugt ist der Anbindungspunkt der Enden der Koppelstange an den Drehgelenken exzentrisch und an unterschiedlichen Stellen der beiden Drehgelenke angeordnet. So kann beispielsweise der Anbindungspunkt des einen Endes der Koppelstange exzentrisch am ersten Drehgelenk und (in Fahrzeughochrichtung betrachtet) oberhalb der Drehachse dieses und das andere Ende der Koppelstange exzentrisch am anderen Drehgelenk und (in Fahrzeughochrichtung betrachtet) unterhalb dessen Drehachse angeordnet sein. Der Antriebsmotor kann dabei an einem der Drehgelenke angeordnet sein und nur eine der Speichen antreiben. Bei einer vom Antriebsmotor veranlassten Längenänderung der ersten Speiche dreht sich das erste lenkradtopfseitige Drehgelenk dieser. Durch eine beschriebene Kopplung mit dem lenkradtopfseitigen Drehgelenk der anderen Speiche dreht sich auch dieses, weshalb sich der Drehwinkel beider Speichen synchron verändert. Eine gleichzeitige und gleichmäßige Längenveränderung der Speichen zueinander kann durch die mechanische Koppelung der Drehgelenke mittels einer Koppelstange auf einfache Weise realisiert werden. Dabei ist die Kopplung der Speichen mittels dem Prinzip einer genannten Koppelstange keinesfalls auf zwei Speichen beschränkt, sondern kann durch geringfügige konstruktive Änderung ebenfalls bei mehr als zwei Speichen angewendet werden.

Eine zweite Möglichkeit zur Ausführung einer genannten Kopplungsvorrichtung ist die Verwendung einer flexiblen Welle. Derartige flexible bzw. biegsame Wellen sind im Fahrzeugbereich beispielsweise bei der Verstellung von Sitzpositionen, Tankdeckeln, Handbremsseilen und vielem mehr bekannt. Sie stellen biegsame Verbindungselemente zur radialen elektromechanischen Kraftübertragung dar. Dabei kann beispielsweise eine derartige flexible Welle direkt mit dem Antriebsmotor und den Speichen gekoppelt sein. Die flexible Welle kann wiederrum (bei einer Ausführung mit zwei Speichen) mit jeweils einem Ende, beispielsweise durch ein Zahnrad oder ein Kegelrad mit jeweils einer Speiche gekoppelt sein und diese dann synchronisiert antreiben. Die Rotationsbewegung des Antriebmotors bzw. dessen Abtriebswelle, welche in diesem Falle direkt mit der flexiblen Welle gekoppelt ist, kann so mittels eines geeigneten Mechanismus an den Speichen in eine synchronisierte Translationsbewegung von mindestens zwei Speichen umgewandelt werden.

In einer nächsten bevorzugten Ausführung der Erfindung, kann die Kopplungsvorrichtung neben den beiden bereits genannten Möglichkeiten, als ein biegsames Zugmittelgetriebe ausgeführt sein. Beispielsweise kann diese als ein Riemengetriebe ausgeführt sein.

Dabei ist es beispielsweise möglich, dass der Antriebmotor einen Antriebsriemen antreibt, welcher Antriebsriemen wiederrum jeweils über ein Ritzel oder ein Kegelritzel die Kraft in die Speiche überträgt bzw. einleitet. Bei einer Ausführung der Erfindung mit mehr als zwei Speichen, beispielsweise bei drei Speichen, kann die Abtriebswelle des Antriebsmotors eine erste Speiche direkt antreiben, während die beiden anderen Speichen unter Zuhilfenahme einer Zahnriemenscheibe mittels eines genannten Antriebriemens angetrieben werden.

Zur Übertragung der Kraft bzw. der Bewegung vom Antriebsriemen bzw. von dem biegsamen Zugmittelgetriebe auf die jeweiligen Speichen kann je nach Ausführungsform der Teleskopspeichen beispielsweise ein genanntes Kegelritzel oder auch ein Stirnritzel zum Einsatz kommen.

In einer bevorzugten Ausführung der Erfindung ist es vorgesehen die genannte Kopplungsvorrichtung mit einem an den Speichen des Lenkrades angeordneten Spindelgewinde zu koppeln. Bei dieser Ausführungsform der Speichen ist es bevorzugt, dass die Kopplungsvorrichtung, also beispielsweise der genannte Antriebsriemen, je ein Kegelritzel pro Speiche antreibt. Die Drehachse dieses Kegelritzels entspricht dann der Drehachse des lenkradtopfseitigen Drehgelenks bzw. Scharniers. Die Rotationsbewegung des Kegelritzels kann auf ein Kegelrad übertragen werden, welches wiederrum fest mit einer Spindel in der Speiche des Lenkrades verbunden ist. Je nach Drehrichtung des Kegelritzels kann sich so das bewegliche Teilsegment der Speiche relativ zum unbeweglichen Teilsegment der Speiche von diesem weg bzw. zu oder in dieses hin bzw. hinein bewegen bzw. verschieben. Diese Verschiebung veranlasst so auf vorteilhafte Weise eine Veränderung des Abstandes zwischen dem Lenkradkranz und dem Lenkradtopf.

Alternativ zu der zuletzt genannten Ausführung kann ebenso anstatt einem genannten Kegelritzel ein Stirnritzel verwendet werden, bei welchen die Drehachse ebenfalls derjenigen des lenkradtopfseitigen Drehgelenks bzw. Scharniers entspricht.

In einer weiteren bevorzugten Ausführung der Erfindung ist die Kopplungsvorrichtung mit einem an den Speichen angeordneten biegsamen Zugmittelgetriebe, also beispielsweise einem Riemen gekoppelt. Dabei kann das genannte Stirnritzel wiederrum einen im unbeweglichen Teilsegment (also solches welches beispielsweise mit dem Lenkradtopf verbunden ist) der Speiche angeordneten Riemen antreiben. Mittels einer geeigneten Übertragungsvorrichtung, wie beispielsweise mittels eines Zahnritzels, kann dann das bewegliche Teilsegment beispielsweise mittels einer Zahnstange angetrieben bzw. bewegt werden. Je nach Drehrichtung kann sich so das unbewegliche Teilsegment der Speiche in das bewegliche Teilsegment hinein oder aus diesem hinaus bewegen.

Anstelle eines zuletzt genannten riemengetriebenen Zahnritzels ist ebenfalls ein beidseitig verzahnter Riemen denkbar, dessen äußere Verzahnung direkt in die der Zahnstange greift.

Auch bei dieser Ausführung der Erfindung ist auf mechanisch einfach Weise eine elektromechanische Verstellung des Lenkrades mit nur einem Antriebsmotor erzielbar.

Ein weiterer Vorteil der erfindungsgemäßen Technologie ist, dass die längenverstellbaren Teleskopspeichen zusätzlich zu einer bestehenden Längenverstellung über die Lenkradsäule verwendet werden können, wobei sich der axiale Verstellweg vergrößert und die Anpassung auf unterschiedliche Körpergrößen bzw. Körpermaße individueller einstellbar ist. Dadurch können ergonomische und gesundheitliche Vorteile für den Fahrzeugführer beim Fahren erzielt werden.

Bei der Verwendung der erfindungsgemäßen Konstruktion als alleinige axiale Positionierungsmöglichkeit des Lenkrades, kann auf den Lägenverstellmechanismus im Lenkradsäulengehäuse verzichtet werden. Dieses Gehäuse kann somit platzsparender gestaltet werden, was sich wiederum positiv auf die Bewegungsfreiheit des Fahrers auswirkt. Im Hinblick auf mögliche Zukunftstechnologien wie beispielsweise dem autonomen Fahren, bei welchen das Lenkrad nur mehr optional genutzt werden soll, ist das erfindungsgemäße Lenkrad und der damit einhergehende vergrößerte Fahrgastraum von großem Vorteil. Zudem ist ein einfacherer Ausklapp- bzw. Ausfahrmechanismus des Lenkrades möglich.

Unabhängig von zukünftigen Zukunftstechnologien kann der durch die erfindungsgemäße Technologie einhergehende vergrößerte Bauraum zur Integration anderer Bauteile, wie beispielsweise eines Head-Up-Displays genutzt werden.

Im Folgenden wird die Erfindung anhand von sieben Ausführungsbeispielen weiter erläutert.
Figur 1 und Figur 2 zeigen ein Lenkrad der erfindungsgemäßen Art in einer Draufsicht und in einer Seitenansicht.
Figur 3 und Figur 4 zeigen je eine weitere Ausführung eines erfindungsgemäßen Lenkrades mit dessen Komponenten.
Figur 5, Figur 6 und Figur 7 zeigen eine Detailansicht von technischen Ausführungsbeispielen einer Speiche eines erfindungsgemäßen Lenkrades.

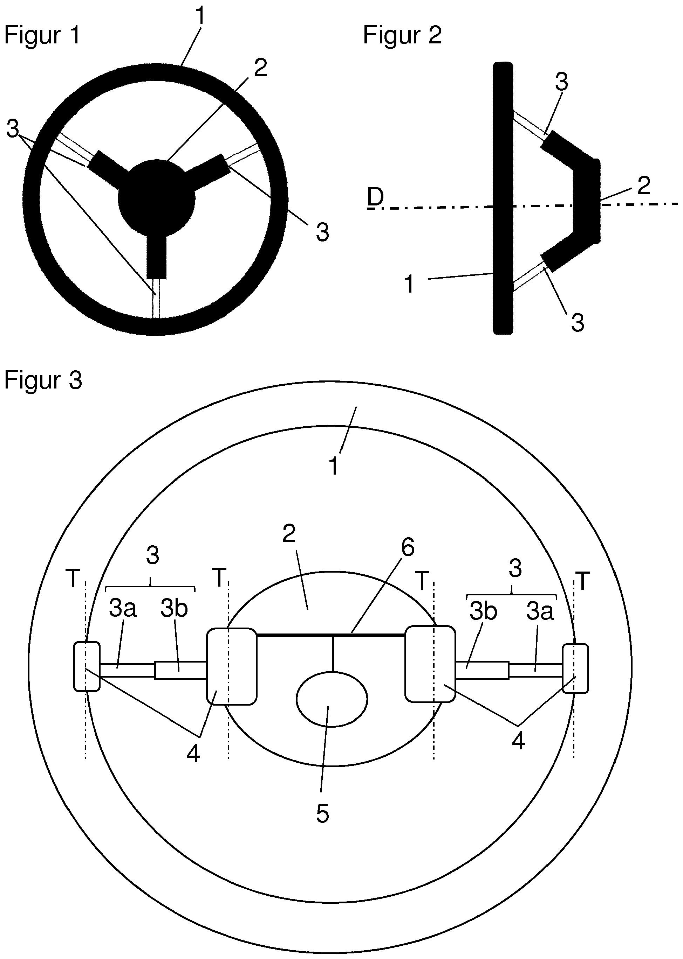

In **Figur 1** wird ein Ausführungsbeispiel eines erfindungsgemäßen Lenkrades in einer Draufsicht aufgezeigt. Dabei umfasst das Lenkrad einen Lenkradkranz 1 sowie einen Lenkradtopf 2, welcher das Lenkrad an einem nicht abgebildeten Fahrzeug lagert. Der Lenkradtopf 2 und der Lenkradkranz 1 sind in diesem konkreten Beispiel über drei teleskopierbare Speichen 3 miteinander verbunden. Diese telesokopierbaren Speichen 3, auch Teleskopspeichen genannt, ermöglichen eine Verschiebbarkeit des Lenkradkranzes 1 gegenüber dem Lenkradtopf 2 in Richtung der Drehachse D des Lenkrades. In **Figur 2** ist ein weiteres Ausführungseispiel eines erfindungsgemäßen Lenkrades in einer Seitenansicht aufgezeigt, in welchem die Drehachse D des Lenkrades zu erkennen ist. In diesem Beispiel umfasst das Lenkrad zwei teleskopierbare Speichen 3. Zudem ist zu erkennen, dass das Lenkrad schüsselförmig aufgebaut ist, das heißt dass der Lenkradtopf 2 und der Lenkradkranz 1 axial (entlang der Drehachse D des Lenkrades betrachtet) voneinander beabstandet sind, sodass diese gemeinsam mit den Speichen 3 eine schüsselartige Form aufspannen.

**Figur 3** zeigt ein weiteres Ausfürhungsbeispiel eines erfindungsgemäßen Lenkrades mit zwei teleskopierbaren Speichen 3 in einer Draufsicht. Dabei sind die notwendigen Komponenten zur Längenverstellung der Speichen 3 innerhalb des Lenkrads aufgezeigt. Hierbei handelt es sich um eine schematische Zeichnung, wobei sich einige der im Folgenden genannten Komponenten in einem realen Ausführungsbeispiel der Erfindung im Inneren des Lenkrades befinden können bzw. in einer äußeren Betrachtung des Lenkrades nicht sichtbar sind.

Die Speichen 3 sind derart teleskopierbar bzw. ihrer Länge nach verstellbar, dass der axiale Abstand entlang der Lenkraddrehachse D betrachtet zwischen Lenkradkranz 1 und Lenkradtopf 2 angepasst bzw. verändert werden kann. Um das gesamte Bewegungssystem statisch zu bestimmen und eine genannte axiale Verstellung der Speichen 3 zu ermöglichen, sind die Speichen 3 an deren beiden Enden jeweils mit einem in dieser Zeichnung nur schematisch angedeuteten Drehgelenk 4 am Lenkradkranz 1 und am Lenkradtopf 2 schwenkbar gelagert. Die Drehachse T der Drehgelenke 4 verläuft dabei in Richtung einer Tangente des (nicht abgebildeten bzw. virtuellen) Drehkreises des Lenkrades. Um eine Längenverstellung bzw. eine Teleskopierbarkeit der Speichen 3 zu gewährleisten, umfasst jede Speiche 3 jeweils ein unbewegliches Teilsegment 3b sowie ein sich zu diesem relativ verschiebbaren beweglichen Teilsegment 3a. Dabei ist das unbewegliche Teilsegment 3b mit dem Lenkradtopf 2 über ein Drehgelenk 4 und das bewegliche Teilsegment 3a mit dem Lenkradkranz 1 über ein weiteres Drehgelenk 4 verbunden. Zur Ausführung dieser Längenverstellung der Speichen 3 ist ein Antriebsmittel vorgesehen. Erfindungsgemäß umfasst das genannte Antriebsmittel einen einzigen Antriebsmotor 5 zur Ansteuerung von mindestens zwei Speichen 3. In diesem konkreten Beispiel ist der genannte Antriebsmotor 5 im Lenkradtopf 2 angeordnet. Zur gleichmäßigen Übertragung der Kraft auf die beiden Speichen 3 bzw. zur Synchronisierung des Drehwinkels der Drehgelenke 4 der Speichen 3 und damit zur Ermöglichung einer identischen bzw. gleich großen Längenverstellung der beiden Speichen 3, sind die Speichen 3 durch eine Kopplungsvorrichtung 6 mit dem Antriebsmotor 5 gekoppelt.

Die genannte Kopplungsvorrichtung 6 kann dabei auf unterschiedliche Weisen ausgeführt sein.

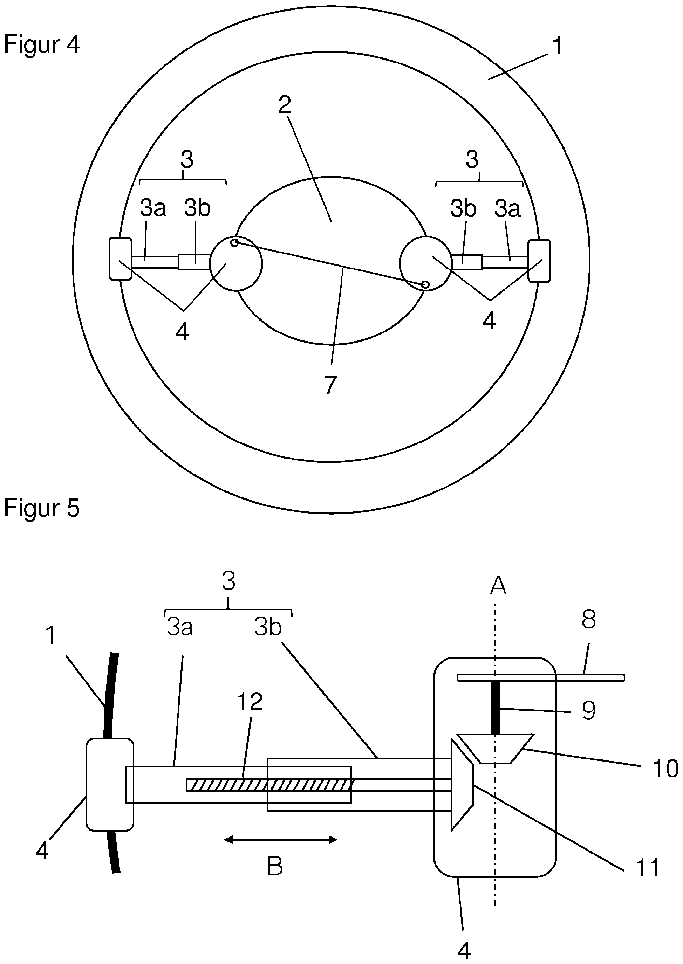

Ein erstes Beispiel zur Ausführung der Kopplungsvorrichtung 6 zeigt **Figur 4****.** Dabei ist die Kopplungsvorrichtung 6 aus Figur 3 als Koppelstange 7 ausgebildet. Die Koppelstange 7 ist fest mit je einem Ende an je einem lenkradtopfseitigen Drehgelenk 4 der Speichen 3 verbunden. Dabei ist die Koppelstange 7 derart mit den Drehgelenken 4 verbunden, dass der Drehwinkel der beiden Drehgelenke bei Drehung eines der beiden auf das andere synchronisiert wird. Dreht sich also beispielsweise das lenkradtopfseitige Drehgelenk 4 einer der beiden Speichen 3, so veranlasst die steife Verbindung der Koppelstange 7 mit dem lenkradtopfseitigen Drehgelenk 4 der anderen Speiche 3 ebenfalls eine Drehbewegung dieses. Die beiden Speichen 3 haben so stets den gleichen Längenverstellweg. Der Antriebsmotor 5, welcher in Figur 4 nicht gezeigt ist, kann beispielsweise im Lenkradtopf 2 in unmittelbarer Nähe eines der lenkradtopfseitigen Drehgelenke 4 angeordnet sein und eines der beiden Speichen 3 antsteuern.

Eine weitere Möglichkeit der Ausführung einer genannten Kopplungsvorrichtung 6 zur Synchronisierung der Längenverstellwege der Speichen 3 ist der Einsatz eines biegsamen Zugmittelgetriebes bzw. eines Antriebriemens 8, welcher nur ansatzweise in den **Figuren 5** - **7** dargestellt ist. Bei der Ausführung von mehr als zwei Speichen, beispielsweise drei Speichen 3, kann eine Speiche mittels eines geeigneten Übertragungsglieds, beispielsweise eines Ritzels, vom Antriebsmotor direkt angesteuert werden, während die anderen beiden Speichen 3 mit Hilfe einer nicht dargestellten Zahnriemenscheibe über den Antriebsriemen 8 angetrieben bzw. angesteuert werden.

**Die** **Figuren 5 bis 7** zeigen jeweils mögliche Ausführungsformen der Bewegungs- bzw. Kraftübertragung von der Kopplungsvorrichtung 6 bzw. von einem Antriebsriemen 8 auf die Speichen 3 zur Durchführung eines Verstellvorgangs der Speichen. Diese Ausführungsformen werden in einer Detailansicht einer einzigen Speiche 3 in einer Draufsicht aufgezeigt, welche wie bereits beschrieben mittels eines Drehgelenks 4 jeweils am Lenkradtopf 2 sowie am Lenkradkranz 1 schwenkbar gelagert ist und welche Speiche 3 ein bewegliches Teilsegment 3a sowie ein unbewegliches Teilsegment 3b umfasst. Es ist vorgesehen, dass andere (bzw. mindestens eine weitere) in den Figuren 5 - 7 nicht aufgezeigte Speichen 3 eines erfindungsmäßen Lenkrades eine identische Konstruktion bzw. Ausführung aufweisen wie die im Folgendem beschriebene.

In **Figur 5** ist eine Speiche 3 aufgezeigt, bei welcher die Kraftübertragung bzw. die Bewegungsübertragung vom Antriebsriemen 8 über eine Welle 9 auf einen Kegelritzel 10 geschieht. Dieser Kegelritzel 10 überträgt die Drehbewegung an ein mit einer Spindel 12 in der Speiche 3 fest verbundenem Kegelrad 11. Die Drehachse dieses Kegelritzels 10 entspricht dabei der Drehachse des lenkradtopfseitigen Drehgelenks 4. Die Drehbewegung der Spindel 12 veranlasst eine translatorische Bewegung B des beweglichen Teilsegments 3a der Speiche 3.

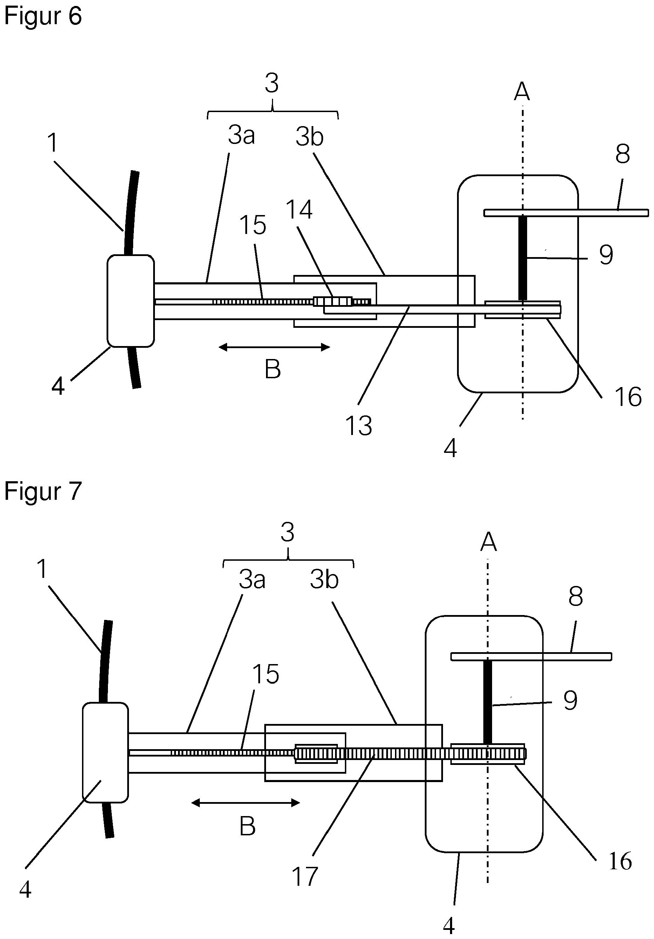

In **Figur 6** ist eine weitere Möglichkeit der Kraftübertragung bzw. Bewegungsübertragung von der Koppelungsvorrichtung 6 bzw. einem Antriebsriemen 8 auf eine Speiche 3 aufgezeigt. Dabei treibt der Antriebsriemen 8 über eine Welle 9 ein Ritzel 16 bzw. ein Stirnritzel 16 an, welcher Ritzel 16 selbst wiederum die Bewegung bzw. die Kraft auf einen im unbeweglichen Teilsegment 3b der Speiche 3 befindlichen Riemen 13 überträgt. Der Riemen 13 überträgt seine Bewegung auf ein Zahnritzel 14, welches an dem vom Lenkradtopf 2 abgewandten Ende des unbeweglichen Teilsegments 3b der Speiche 3 angeordnet ist. Das Zahnritzel 14 greift anschließend in eine Zahnstange 15, welche am beweglichen Teilsegment 3a der Speiche angeordnet ist. Dadurch verschiebt sich das bewegliche Teilsegment 3a mit einer translatorischen Bewegung B gegenüber dem unbeweglichen Teilsegment 3b der Speiche 3.

Alternativ zu dem in Figur 6 abgebildeten riemengetriebenen Zahnritzel 14, kann, wie in **Figur 7** dargestellt, ebenfalls ein beidseitig verzahnter Riemen 17, dessen äußere Verzahnung direkt in die Verzahnung der Zahnstange 15 greift, verwendet werden.

### Bezugszeichenliste:

- 1: Lenkradkranz
- 2: Lenkradtopf
- 3: Speiche
- 3a: bewegliches Teilsegment der Speiche
- 3b: unbewegliches Teilsegment der Speiche
- 4: Drehgelenk
- 5: Antriebsmotor
- 6: Kopplungsvorrichtung
- 7: Koppelstange
- 8: Antriebsriemen
- 9: Welle
- 10: Kegelritzel
- 11: Kegelrad
- 12: Spindel
- 13: Riemen
- 14: Zahnrad
- 15: Zahnstange
- 16: Ritzel
- 17: Doppelseitiger Zahnriemen
- D: Drehachse des Lenkrades

## Patentansprüche

1. Lenkrad zur Betätigung einer Lenkbewegung eines Fahrzeuges umfassend
• einen Lenkradtopf (2) zur Lagerung des Lenkrades an einem Fahrzeug,
• einen Lenkradkranz (1)
• sowie mindestens zwei den Lenkradkranz (1) mit dem Lenkradtopf (2) verbindende Speichen (3), welche Speichen (3) mittels
• eines Antriebsmittels teleskopierbar sind und damit der Lenkradkranz (1) gegenüber dem Lenkradtopf (2) in Richtung der Drehachse (D) des Lenkrades verschiebbar ist, wobei das Antriebsmittel einen einzigen Antriebsmotor (5) zur Ansteuerung von mindestens zwei Speichen (3) umfasst, **dadurch gekennzeichnet, dass** die Speichen (3) schwenkbar mit dem Lenkradtopf (2) und mit dem Lenkradkranz (1) verbunden sind.

2. Lenkrad nach Anspruch 1, wobei die Speichen (3) jeweils ein bewegliches Teilsegment (3a) und ein unbewegliches Teilsegment (3b) umfassen, welche beiden Teilsegmente ineinander angeordnet sind und das bewegliche Teilsegment (3a) relativ zu dem unbeweglichen Teilsegment (3b) teleskopierbar ist.

3. Lenkrad nach einem der vorangegangenen Ansprüche, wobei der Antriebsmotor (5) im Lenkradtopf (2) angeordnet ist.

4. Lenkrad nach einem der vorangegangenen Ansprüche, wobei die mindestens zwei Speichen (3) durch eine Kopplungsvorrichtung (6) mit dem Antriebsmotor (5) gekoppelt sind.

5. Lenkrad nach einem der vorangegangenen Ansprüche, wobei die Kopplungsvorrichtung (6) eine Koppelstange (7) ist.

6. Lenkrad nach einem der vorangegangenen Ansprüche 1 - 4, wobei die Kopplungsvorrichtung (6) eine flexible Welle ist.

7. Lenkrad nach einem der vorangegangenen Ansprüche 1 - 4, wobei die Kopplungsvorrichtung (6) ein biegsames Zugmittelgetriebe ist.

8. Lenkrad nach einem der vorangegangenen Ansprüche, wobei die Kopplungsvorrichtung (6) mit einem Spindelgewinde (12) an den Speichen (3) gekoppelt ist.

9. Lenkrad nach einem der vorangegangenen Ansprüche 1- 8, wobei die Kopplungsvorrichtung (6) mit einem biegsamen Zugmittelgetriebe an den Speichen (3) gekoppelt ist.

## Claims

1. Steering wheel for the actuation of a vehicle comprising
• a steering wheel pot-shaped structure (2) for mounting the steering wheel on a vehicle,
• a steering wheel rim (1),
• and at least two spokes (3) which connect the steering wheel rim (1) to the steering wheel pot-shaped structure (2), which spokes (3) can be telescoped by means of
• a drive means, and therefore the steering wheel rim (1) can be displaced in the direction of the rotational axis (D) of the steering wheel with respect to the steering wheel pot-shaped structure (2), the drive means comprising a single drive motor (5) for the actuation of at least two spokes (3), **characterized in that** the spokes (3) are connected pivotably to the steering wheel pot-shaped structure (2) and to the steering wheel rim (1).

2. Steering wheel according to Claim 1, the spokes (3) in each case comprising a movable part segment (3a) and an immovable part segment (3b), which two part segments are arranged inside one another, and it being possible for the movable part segment (3a) to be telescoped relative to the immovable part segment (3b).

3. Steering wheel according to either of the preceding claims, the drive motor (5) being arranged in the steering wheel pot-shaped structure (2).

4. Steering wheel according to one of the preceding claims, the at least two spokes (3) being coupled to the drive motor (5) by way of a coupling apparatus (6).

5. Steering wheel according to one of the preceding claims, the coupling apparatus (6) being a coupling rod (7) .

6. Steering wheel according to one of the preceding Claims 1 to 4, the coupling apparatus (6) being a flexible shaft.

7. Steering wheel according to one of the preceding Claims 1 to 4, the coupling apparatus (6) being a flexible traction drive mechanism.

8. Steering wheel according to one of the preceding claims, the coupling apparatus (6) being coupled to a spindle thread (12) on the spokes (3).

9. Steering wheel according to one of the preceding Claims 1 to 8, the coupling apparatus (6) being coupled to a flexible traction drive mechanism on the spokes (3).

## Revendications

1. Volant pour l'actionnement d'un mouvement de direction d'un véhicule, comprenant :
- une tulipe de volant (2) pour le montage du volant sur un véhicule,
- une couronne de volant (1),
- ainsi qu'au moins deux branches (3) reliant la couronne de volant (1) avec la tulipe de volant (2), les branches (3)
- étant télescopiques grâce à un moyen d'entraînement et la couronne de volant (1) pouvant ainsi être déplacée par rapport à la tulipe de volant (2) en direction de l'axe de rotation (D) du volant, le moyen d'entraînement comprenant un moteur d'entraînement unique (5) pour la commande d'au moins deux branches (3), **caractérisé en ce que** les branches (3) sont reliées en pivotement avec la tulipe de volant (2) et avec la couronne de volant (1).

2. Volant selon la revendication 1, dans lequel les branches (3) comprennent chacune un segment partiel mobile (3a) et un segment partiel immobile (3b), les deux segments partiels étant agencés l'un dans l'autre et le segment partiel mobile (3a) étant télescopique par rapport au segment partiel immobile (3b).

3. Volant selon l'une quelconque des revendications précédentes, dans lequel le moteur d'entraînement (5) est agencé dans la tulipe de volant (2).

4. Volant selon l'une quelconque des revendications précédentes, dans lequel lesdites au moins deux branches (3) sont accouplées par un dispositif d'accouplement (6) avec le moteur d'entraînement (5).

5. Volant selon l'une quelconque des revendications précédentes, dans lequel le dispositif d'accouplement (6) est une tige d'accouplement (7).

6. Volant selon l'une quelconque des revendications 1 à 4 précédentes, dans lequel le dispositif d'accouplement (6) est un arbre flexible.

7. Volant selon l'une quelconque des revendications 1 à 4 précédentes, dans lequel le dispositif d'accouplement (6) est une transmission à moyen de traction souple.

8. Volant selon l'une quelconque des revendications précédentes, dans lequel le dispositif d'accouplement (6) est accouplé aux branches (3) avec un filetage de broche (12).

9. Volant selon l'une quelconque des revendications 1 à 8 précédentes, dans lequel le dispositif d'accouplement (6) est accouplé aux branches (3) avec une transmission à moyen de traction souple.
